# EUROPEAN PATENT SPECIFICATION

(11) **EP 2 872 330 B1**
(45) Date of publication and mention of the grant of the patent: **09.08.2017**
(21) Application number: 13812734.5
(22) Date of filing: 26.06.2013
(51) Int. Cl.: D21H 19/36, B32B 7/12, B65D 77/06, B32B 29/00

(54) **PACKAGE FOR FOODSTUFF**
VERPACKUNG FÜR LEBENSMITTEL
EMBALLAGE POUR DENRÉES ALIMENTAIRES

(30) Priority: 05.07.2012 FI 20125775
(43) Date of publication of application: 20.05.2015
(73) Proprietor: UPM Specialty Papers Oy, 00100 Helsinki (FI)
(72) Inventor: LEHMUSKALLIO, Timo, FI-33100 Tampere (FI)
(74) Representative: Berggren Oy, Tampere
(86) International application number: PCT/FI2013/050709
(87) International publication number: WO 2014/006269

(56) References cited:
- WO-A1-02/053838
- WO-A1-2010/042162
- WO-A1-2010/042162
- WO-A1-2010/141581
- WO-A1-2012/084127
- WO-A2-2007/130417
- DE-A1- 10 307 494
- JP-A- 2002 326 321
- US-A- 6 066 379
- US-A1- 2011 248 076

## Description

### Field of the invention

The invention relates to a food package. Further, the invention relates to an inner material for a food package. The invention also relates to the use of an inner material for a food package in a food package.

### Background of the invention

In industry, a large variety of packaging materials are manufactured for packaging foodstuffs. The food package may comprise, for example, paper or plastic. In industry, however, there is still a need for a novel food package.

WO2012084127 discloses a food package comprising an outer package recycled cardboard, and a flexible bag which is placed inside the outer package. The inner flexible bag material comprises a volatiles barrier layer made of an extruded blend of amorphous polyethylene terephthalate (PETG) and a polyethylene-based polymer (PE) for preventing or slowing down the migration of short chain hydrocarbons or hydro-carbon mineral oils originating e.g. from printing ink or mineral oils contained in recycled papers.

### Brief summary of the invention

It is an aim of this invention to present a food package. Furthermore, it is an aim of this invention to present an inner packaging material for a food package, and the use of the inner packaging material for packaging foodstuffs.

Preferably, a food package comprises an outer package and an inner package, wherein the inner package is placed inside the outer package. The inner package comprises inner packaging material. The outer package advantageously comprises mineral oil.

Advantageously, the food package comprises an outer package which is advantageously a cardboard or paperboard box, and an inner package which is advantageously a bag-like package,
wherein the inner package comprises material that comprises
- base paper that comprises cellulose-containing natural fibres, and
- a coating on at least one surface of the base paper, the coating comprising a coating layer that contains platy coating pigment and binding agent, advantageously acrylate latex, styrene butadiene latex, styrene acrylate latex, and/or polyvinyl alcohol.

Advantageously, the inner packaging material comprises
- base paper that comprises cellulose-containing natural fibres, and
- a coating on at least one surface of the base paper, the coating comprising a coating layer that contains platy coating pigment and binding agent, advantageously acrylate latex, styrene butadiene latex, styrene acrylate latex, and/or polyvinyl alcohol.

Advantageously, a method for manufacturing inner packaging material comprises
- supplying base paper that contains cellulose-containing natural fibres to a system, and
- coating said base paper with a coating that contains platy pigment and binding agent, the binding agent being advantageously acrylate latex, styrene butadiene latex, styrene acrylate latex, and/or polyvinyl alcohol.
The inner packaging material can be made either by a paper machine in connection with the manufacture of the base paper, or separately from the manufacture of the base paper. For example, the base paper of the inner packaging material can be coated in connection with the manufacture of the base paper in the paper machine (on-line), or in a separate step after the manufacture of the base paper.

Advantageously, a method for manufacturing a food package comprises
- supplying an inner package to a system, the inner package comprising inner packaging material, food being advantageously packed therein,
- supplying an outer package to the system, and
- placing the inner package inside the outer package, for forming the food package.

Advantageously, a system for forming inner packaging material comprises
- means for supplying base paper that contains cellulose-containing natural fibres to the system, and
- a coating unit for coating said base paper with a coating that contains platy pigment and binding agent, the binding agent being advantageously acrylate latex, styrene butadiene latex, styrene acrylate latex, and/or polyvinyl alcohol.

If the base paper is coated in a paper machine (on-line), no unwinder will be needed.

The means for supplying base paper to the system typically comprise, among other things, an unwinder for unwinding base paper in the form of a roll.

The coating unit for forming the coating of inner packaging material on at least one surface of the base paper of the inner packaging material can consist of one or more coating devices. If at least two coating units are provided, at least one dryer can be placed between and/or after said at least two coating devices, for increasing the dry content of the material. The coating unit is advantageously in connection with the paper machine and/or in the same industrial plant as the paper machine.

To achieve the aim of the invention, the food package according to the invention is primarily characterized in what will be presented in the appended claim 1. The inner packaging material according to the invention and its use for packaging food are primarily characterized in what will be presented in the appended claims 17 and 18.

In an example, the food package comprises an outer package which contains mineral oil, and an inner package which is placed inside the outer package. Said inner package preferably contains at least 50% of inner packaging material that contains from 0 to less than 2 g/m² of biopolymers. The inner packaging material contains base paper with a coating. Said coating comprises one or more platy coating pigments, and binding agent comprising acrylate latex, styrene butadiene latex, styrene acrylate latex, and/or polyvinyl alcohol. 20 to 60 wt-% of the total dry weight of said platy coating pigment and polyvinyl alcohol consists of binding agent. Furthermore, the total dry weight of said platy coating pigment and binding agent constitutes at least 70 wt-% of said coating.

Preferably, the inner package is a bag. The outer package is advantageously a paperboard or cardboard box, and/or contains at least 50% or at least 60%, more advantageously at least 70% or at least 80%, and most advantageously 90 % of paper or cardboard.

In an example, the outer package comprises compounds which belong to MOSH (mineral oil saturated hydrocarbons) and/or MOAH (mineral oil aromatic hydrocarbons). Advantageously, the outer package comprises one or more MOSH compounds having a chain length of C10 to C23.

In an advantageous example, the package according to the invention for packaging foodstuffs is intended for the packaging of dry products, such as dried bread, foodstuffs in powder form, and/or cereals. In an example, the package according to the invention is intended for the packaging of bakery products.

The inner packaging material and the food package comprising inner packaging material according to the invention have several advantages. The inner packaging material according to the invention can be manufactured in such a way that appropriate water permeance, water vapour permeance as well as air permeance are achieved. Furthermore, the inner packaging material according to the invention prevents the migration of mineral oil from the outer package of the food package through the inner packaging material of the inner package of the food package into the food. Thanks to this, it is possible to use, in connection with the outer package of the food package, for example recovered fibres that contain oil-based detrimental elements and/or oil-based printing inks, in such a way that the oil-based material does not come into contact with the food packed in the food package.

The inner packaging material according to the invention for packaging foodstuffs, as well as the food package according to the invention can be manufactured in an environmentally friendly way so that the material and/or food package can be, for example, recycled and/or composted and/or burnt after usage.

### Description of the drawings

In the following, the invention will be described in more detail with reference to the appended drawings, in which:
- Fig. 1: shows inner packaging material according to an embodiment of the invention for packaging foodstuffs, in a cross-sectional view;
- Fig. 2a: shows an inner package for a food package according to an embodiment;
- Fig. 2b: shows a food package according to an embodiment, comprising an inner package and an outer package;
- Fig. 3a: shows an example of manufacturing inner packaging material, in a reduced schematic chart;
- Fig. 3b: shows an example of manufacturing a food package of an inner package and an outer package, in a reduced schematic chart; and
- Fig.4: shows inner packaging material for packaging foodstuffs according to an embodiment of the invention, in a cross-sectional view.

### Detailed description of the invention

In this application, all the contents (percentages) are in dry weight, unless otherwise expressed.

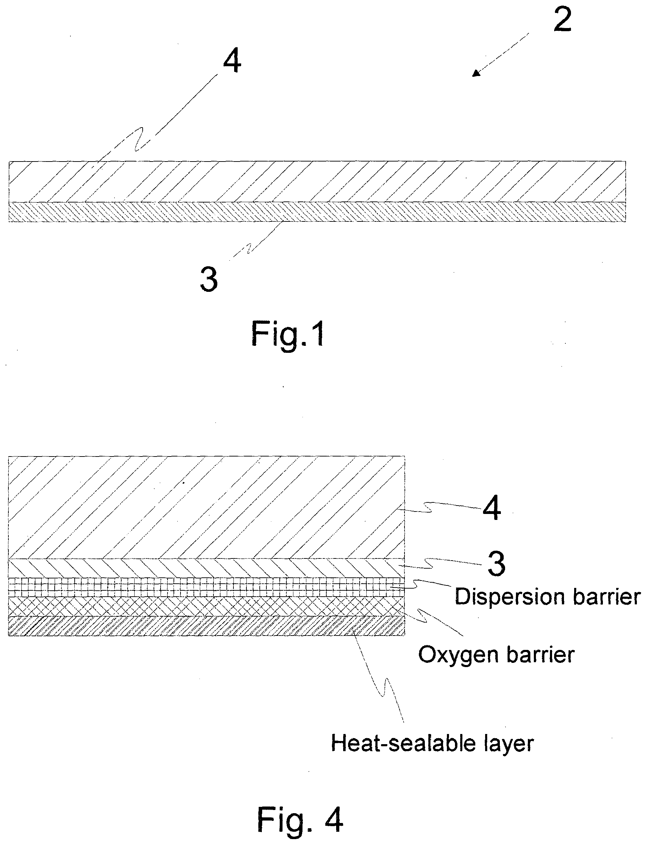

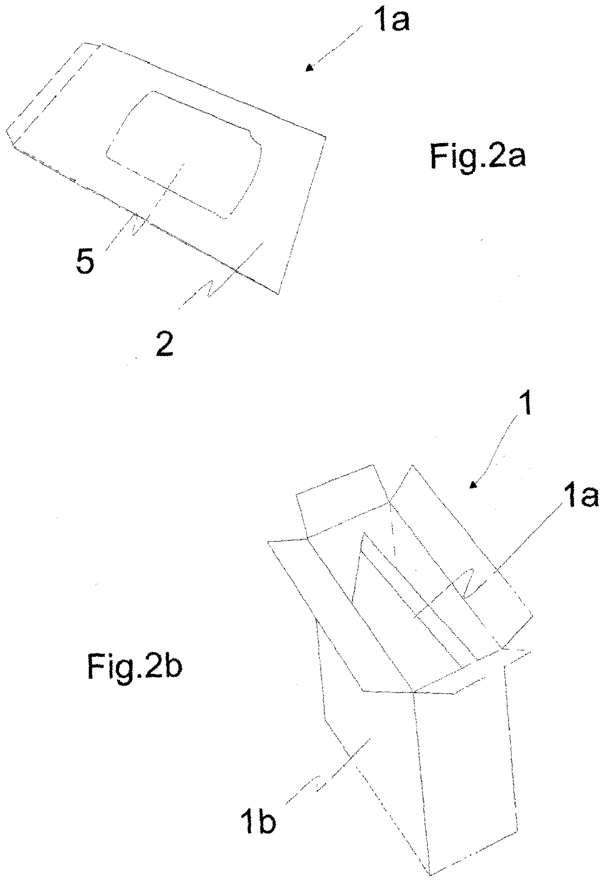

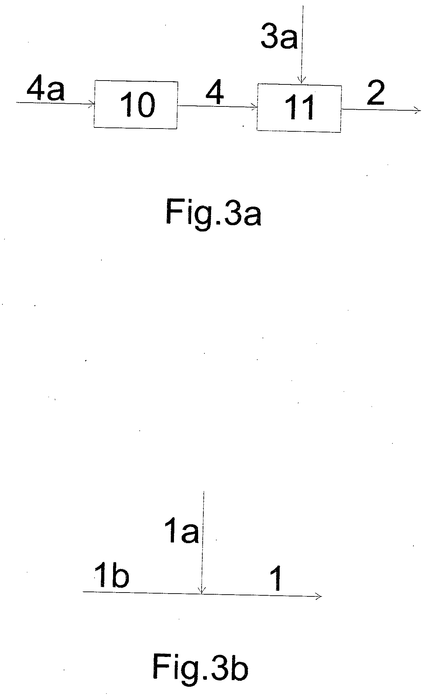

In this application, reference is made to Figs. 1 to 4, in which the following reference numerals are used:
- 1: food package,
- 1a: inner package; that is, inner package of a food package,
- 1b: outer package, i.e. outer package of a food package,
- 2: inner packaging material, i.e. material used in an inner package,
- 3: coating on inner packaging material,
- 4: base paper for inner packaging material,
- 4a: raw materials for base paper of inner packaging material,
- 5: section in the inner package where no material 2 has been used,
- 10: paper machine, and
- 11: coating unit.

A food package 1 according to the invention preferably comprises an inner package 1 a and an outer package 1 b, wherein the inner package 1 a is placed inside the outer package 1 b. Food is preferably packed in the inner package.

The inner package 1 a preferably comprises inner packaging material 2. The inner packaging material preferably comprises base paper 4 coated on one side or both sides with a coating 3 that contains platy pigment and binding agent.

The outer package 1 b preferably comprises natural fibres, inorganic filler, and additives. Advantageously, the outer package 1 b comprises or consists of paper, paperboard and/or cardboard. Advantageously, the outer package is shaped as a box. Preferably, the outer package is a paperboard or cardboard box.

In this application, the term 'gsm' refers to grams per square meter (g/m²). Unless otherwise expressed, all the basis weights are in dry weight.

The term 'RH' relates to relative humidity of the air.

The term 'PVA' refers to polyvinyl alcohol.

The term 'WVTR' refers to water vapour transmission rate, i.e. water vapour barrier at conditions of RH 50%, temperature 23°C. The water vapour transmission rate has been measured according to the standard ISO 2528:115 (valid in 2011).

The term 'KIT' refers to a determining method according to the Tappi standard (Tappi T559 cm-02, valid in 2011) for paper and paperboard with oil and grease resistance.

The term 'Cobb' refers to the so-called Cobb value measured according to the standard ISO 535:1991 (valid in 2011).

The term 'platy coating pigment' refers to coating pigments present in platy form. The term 'platy' refers to a structure in which one dimension is substantially smaller than the two other dimensions of the structure. Advantageously, one dimension is at least 2 or 3 times smaller, more advantageously at least 5 or 10 times smaller, and most advantageously at least 20 times smaller than the other two dimensions of the structure.

Advantageously, the inner packaging material comprises platy coating pigments. The content of platy coating pigments of all the coating pigments in the inner packaging material is advantageously at least 60 wt%, more advantageously at least 75wt-% or at least 85 wt-%, and most advantageously at least 95 wt-% or at least 99 wt-%. Advantageously, the platy coating pigment consists of or comprises talc, kaolin, and/or mica. In an advantageous example, the content of kaolin in the platy coating pigments used for the coating of the inner packaging material is at least 50 wt-% or at least 60 wt-%, more advantageously at least 70 wt-% or at least 80 wt-%, and most advantageously at least 90 wt-%. The content of kaolin in the platy coating pigments to be used for the coating can be even at least 95 wt-% or 100 wt-%. Preferably, the kaolin used is so-called chemically untreated kaolin which may be mechanically treated but whose properties have not been chemically modified.

The term coating of the inner packaging material 2 refers to a coating that contains platy pigment and binding agent. Advantageously, the binding agent comprises acrylate latex, styrene butadiene latex, styrene acrylate latex, and/or polyvinyl alcohol. Advantageously, the total content of the above-mentioned binding agents in the binding agent of the inner packaging material is at least 50% or at least 60%, more advantageously at least 70% or at least 80%, and most advantageously at least 90% or at least 99%. Preferably, said binding agent comprises or consists of polyvinyl alcohol in such a way that the content of polyvinyl alcohol in the whole binding agent is advantageously at least 50% or at least 60%, more advantageously at least 70% or at least 80%, and most advantageously at least 90% or at least 99%.

The term 'natural fibre' refers to any plant material that contains cellulose. The natural fibre may be wood-based. The wood may be softwood, such as spruce, pine, silver fir, larch, Douglas fir, or Canadian hemlock; or hardwood, such as birch, aspen, poplar, alder, eucalyptus, or acacia; or a mixture of softwood and hardwood. Other than wood-based raw materials may include agricultural waste, grasses or other plant materials, such as straw, leaves, bark, seeds, legumes, flowers, tops, or fruit, which have been obtained from cotton, corn, wheat, oat, rye, barley, rice, flax, hemp, Manila hemp, sisal hemp, jute, ramee, kenaf hemp, bagasse, bamboo, or reed.

The term base paper 4 of the inner packaging material refers to paper that comprises cellulose-containing natural fibres, typically as its main raw material. In addition, the base paper may comprise, for example, one or more fillers and/or one or more additives.

Preferably, the natural fibre used in the base paper 4 of the inner packaging material comprises chemically pulped natural fibre, that is, pulp made in a chemical pulping process. In an advantageous example, the content of chemically pulped natural fibres in all the natural fibres in the base paper 4 of the inner packaging material 2 is thus at least 70 wt-%, for example at least 80 wt-% or at least 90 wt%. Advantageously, at least 60 wt-% or at least 70 wt-%, more advantageously at least 80 wt-% and most advantageously at least 90 wt-% of the natural fibres are wood-based. The diameter of the natural fibres is normally 15 to 25 µm, and the length more than 500 µm, but the present invention is not intended to be limited to these parameters.

The inner packaging material 2 according to the invention and the inner package 1 a can act particularly well against migration of mineral oil. Therefore, the inner package 1 a can be used to prevent the migration of mineral oil from the outer package 1 b into the food product packed in the food package 1. Possible migration of mineral oil residues from the outer package 1 b into the product packed in the inner package 1 a would be particularly problematic in the case of foodstuffs.

Oil barrier refers to protection against fluid oil, such as cooking oil or butter. In this application, mineral oil migration barrier refers to protection against mineral oil in gaseous state. In other words, the product according to the invention provides protection against gasified mineral oil components.

In this application, the mineral oil migration barrier advantageously prevents the migration of such components which belong to MOSH (mineral oil saturated hydrocarbons) and/or MOAH (mineral oil aromatic hydrocarbons). Advantageously, the mineral oil migration barrier prevents such MOSH and/or MOAH compounds, preferably MOSH compounds, whose chain length is between C10 and C40, more advantageously between C15 and C35 and/or C15 and C23, from coming into contact with food. Preferably, the mineral oil migration barrier prevents such gasified MOSH and/or MOAH compounds, preferably MOSH compounds, whose chain length is between C10 and C23, from migrating from the outer package 1b into good.

The migration of the mineral oil can be calculated, for example, by the analysis method used by the Papiertechnische Stifftung (PTS) for defining the migration of mineral oil into food (Tenax® migration test). The migration into the food stimulant Tenax® is thus determined on the basis of the determining method DIN EN 14338 by means of a migration cell.

Mineral oil residues may be introduced into the food package 1 for example if the outer package 1 b contains recovered fibres; recovered fibres may contain mineral oil residues, because the recovered fibres may have been previously printed with mineral oil printing inks. Thus, the inner packaging material 2 can act as a particularly good barrier layer for said mineral oil residues in such a way that they cannot come into contact with the food to be packed. In other words, the solution according to the invention enables the use of recovered fibres in the food package 1. Consequently, the solution according to the invention prevents the migration of possible printing ink residues, such as mineral oils, from the outer package made of, for example, recycled paper or cardboard into the product packed in said package. Printing ink residues are possible when recovered fibres, from which previous printing inks have been removed by de-inking, are used in the manufacture of the package.

In addition or instead, the mineral oil residue may be introduced into the food package 1, for example, via printing ink that contains mineral oil, in connection with the printing of the food package 1. Food packages 1 typically comprise printings on their outer surfaces. Thus, the inner packaging material 2 can act particularly well as a barrier layer for said mineral oil of the printing ink in such a way that said oil cannot come into contact with the food to be packed. In other words, the solution according to the invention enables the use of printing ink that contains mineral oils, in the food package 1. Consequently, with the solution according to the invention it is possible to prevent the migration of mineral oils used in printing inks into the product packed in the food package. In other words, the food package 1 according to the invention is particularly useful in a situation in which said food package, particularly the outer package 1 b of the food package, contains mineral oil.

If the food package 1 contains mineral oil, it is preferably in the outer package 1 b. Thus, the inner packaging material 2 advantageously forms an inner package 1 a placed inside said outer package 1 b. Such a solution can be, for example, a food package 1 which is intended for the packaging of cereals, soup powders or sauce powders, in which preferably at least the outer package 1 b comprises a printing, and an inner package 1 a acting as a mineral oil migration barrier is placed inside the outer package, said food being inside the inner package 1 a.

The base paper 4 of the inner packaging material 2 is preferably paper which has not been coated with pigment. In an example, said base paper 4 is so-called bag paper, such as so-called machine glazed (MG) paper. One side of MG paper is typically smoother than the other side of the paper. In an example, the base paper 4 is fine paper, that is, paper that does not contain so-called mechanical pulp.

The first coating 3 of the inner packaging material 2 that contains pigment and binding agent can be applied onto one side of the base paper 4 of the inner packaging material 2, or it can be applied onto both sides of the base paper 4. The coating 3 may comprise a single coating layer, or it may comprise several coating layers, such as two, three or four coating layers. Said coating 3 is placed in the food package 1 in such a way that it is placed between the food and the possible mineral oil in the package.

The base paper 4 of the inner packaging material 2 according to the invention is advantageously made by a paper machine 10. The manufactured base paper 4 of the inner packaging material is preferably coated with a coating unit 11 for forming the coating 3 of the inner packaging material 2.

The coating of the base paper 4 of the inner packaging material 2 may have been implemented by using solutions of prior art, such as one or more of the following: blade coating, flooded nip application, nozzle application, short retention application, rod coating, air brush coating, film transfer coating, curtain coating, or spray coating. In an advantageous example, at least one coating layer is formed by film transfer coating, rod coating, or blade coating. If the coating is performed in at least two steps, for example, at least one dryer unit can be provided between two successive coating devices and/or coating units, for reducing the moisture content of the material.

The total content of the coating 3 of the inner packaging material 2 in the packaging material is advantageously 1 to 17 gsm or 3 to 16 gsm, more advantageously 5 to 15 gsm or 7 to 14 gsm, and most advantageously 8 to 13 gsm or 9 to 12 gsm, irrespective of whether the base paper is coated on one side or both sides. If the coating 3 of the inner packaging material consists of several coating layers, the content of a single coating layer is preferably 1 to 12 gsm, more preferably 3 to 5 gsm. In an example, the coating 3 of the inner packaging material consists of two coating layers. Thus, the first coating layer with a basis weight of preferably 1 to 6 gsm is preferably applied by film coating, and the second coating layer with a basis weight of preferably 3 to 12 gsm is preferably applied by blade coating.

The basis weight (dry weight) of the base paper 4 of the inner packaging material is advantageously 35 to 80 gsm, more advantageously at least 40 gsm. In an example, the basis weight of the base paper of the inner packaging material is at least 45 gsm and not more than 70 gsm, more advantageously not more than 65 gsm. Advantageously, the filler content of the base paper 4 is thus 5 to 25%, more advantageously 6 to 20% and most advantageously 8 to 15%. In another example, the basis weight of the base paper of the inner packaging material is 70 to 300 gsm, more advantageously 110 to 250 gsm and most advantageously 150 to 200 gsm. Thus, the filler content of the base paper is advantageously 5 to 50%, more advantageously 8 to 25% and most advantageously 10 to 20%.

In an example, the platy coating pigment of the inner packaging material is substantially dry when it is applied onto the base paper 4 of the inner packaging material. Preferably, the platy coating pigment is mixed in water, that is, in the form of a so-called slurry, when it is applied onto the base paper 4 of the inner packaging material.

The properties of a mixture that comprises platy coating pigment, such as kaolin, and binding agent, can be adjusted for example by changing the thickness of the coating layer 3 of the inner packaging material so that the insulating capacity of the coating 3 is typically improved when the thickness of the coating layer 3 is increased. Furthermore, the properties can be influenced, among other things, by changing the relative contents of the platy coating pigment and the binding agent, preferably polyvinyl alcohol. When the content of the platy coating pigment increases in relation to the content of, for example, polyvinyl alcohol, the viscosity of the coating typically decreases and its porosity increases.

Preferably, in the coating of the inner packaging material, the relative proportion of one or more platy coating pigments in the total content of said one or more platy coating pigments and polyvinyl alcohol is at least 40 wt-% (wherein the content of polyvinyl alcohol is not higher than 60 wt% of the total content of said one or more platy coating pigments and polyvinyl alcohol), more advantageously 45 to 80 wt-% (wherein the content of polyvinyl alcohol is 20 to 55 wt-%), and even more advantageously 50 to 70 wt-% (wherein the content of polyvinyl alcohol is 30 to 50% of the total content of said one or more platy coating pigments and polyvinyl alcohol).

If the proportion of polyvinyl alcohol to the platy coating pigment is increased, it may be possible to reduce the total quantity of the coating 3 used. In a corresponding manner, if the proportion of the platy coating pigment to polyvinyl alcohol is increased, a thicker coating layer may be needed.

Advantageously, the water vapour transmission rate of the material 2 (23°C, RH 50%) is 0.5 to 12 gsm/day, more advantageously 0.6 to 8 gsm/day, and most advantageously 0.8 to 3 gsm/day or 1 to 2 gsm/day.

Advantageously, the grease resistance of the packaging material 2, measured by the Oil Unger (60 s) method, is thus 0.3 to 1.5. Alternatively or in addition, the Oil Unger (60 s) cannot be greater than 1.3 or not greater than 1.0 or not greater than 0.7.

Advantageously, the packaging material 2 is capable of preventing at least 95%, at least 96% or at least 97%, more advantageously at least 98% or at least 98.5%, and most advantageously at least 98,8%, at least 99% or at least 99.3% of the migration of MOAH and/or MOSH mineral oils, most advantageously MOAH and/or MOSH mineral oils having a chain length smaller than C35, from the outer package to the packed food.

Advantageously, the water resistance of the packaging material 2, measured by the Cobb (1800 s) test, is 17 to 35, for example 18 to 25.

In an example, the oxygen barrier of the packaging material 2 is 2,000 to 33,000 cc/m²/day, more advantageously 5,000 to 28,000 cc/m²/day, and most advantageously 10,000 to 25,000 cc/m²/day. In another example, the oxygen barrier of the packaging material 2 is lower than 1,000 cc/m²/day, lower than 500 cc/m²/day or lower than 200 cc/m²/day, more advantageously lower than 100 cc/m²/day, lower than 50 cc/m²/day or lower than 20 cc/m²/day, and most advantageously lower than 15 cc/m²/day, lower than 10 cc/m²/day or 5 cc/m²/day.

Advantageously, the KIT value of the packaging material 2 is 4 to 12, more advantageously between 4 and 9, or between 5 and 8.

The coating 3 of the inner packaging material according to the invention may also comprise other substances than one or more platy coating pigments and binding agent, which is preferably polyvinyl alcohol. In an advantageous example, the total content of the platy coating pigment and binding agent in the coating 3 of the inner packaging material (calculated dry content) is at least 70 wt-% or at least 75 wt-%, more advantageously at least 80 wt-% or at least 85 wt-%, and most advantageously at least 90 wt-% or at least 95 wt-%. Preferably, the coating 3 of the inner packaging material consists totally or substantially totally of one or more platy coating pigments and binding agent.

Advantageously, in the packaging material 2, the ratio coating pigment to binding agent, more advantageously coating pigment to PVA, is formed so that the content of binding agent and/or PVA in said substances is at least 20 wt-%, at least 30 wt-%, at least 40 wt-%, or at least 50 wt%. In addition or alternatively, said ratio is advantageously formed so that the content of binding agent and/or PVA in said substances is not higher than 80 wt-%, not higher than 70 wt-%, or not higher than 60 wt%.

As the content of coating 3 in the inner packaging material 2 increases, the grease resistance of the inner packaging material 2 is typically improved.

The inner packaging material 2 according to the invention can be used for forming the inner package 1 a of a food package. In an advantageous example, the inner package 1 a is a bag or has a substantially bag-like shape. The inner package 1 a may or may not also comprise one or more materials 5 other than the inner packaging material 2 according to the invention, for example in the form of a so-called "window". Advantageously, even in such a case, the content of the inner packaging material 2 according to the invention is still at least 50%, more advantageously at least 60% or at least 70%, and most advantageously at least 80% or at least 90% of the surface area of the inner package 1 a of said food package 1.

According to an example, inner packaging material 2 is used in the inner package 1 a for food, for packaging dry products, such as powder foods and/or cereals. In another example, the inner packaging material 2 is used for packaging bakery products, such as pastries. In a fourth example, the inner packaging material 2 is used for the packaging of flour, dry food, cereals, muesli, sugar, salt, pepper, animal feed, spices, dry soups, coffee, cocoa, biscuits, snacks, tea, pasta, and/or rice.

The product according to the invention can also contain layers other than said base paper and coating. In an example, the product contains, in addition to the above-mentioned materials, for example protective lacquer on the surface of the product and/or between the material layers.

In an example, the packaging material 2 comprises, in addition to the above-mentioned base paper 4 and coating 3, a separate dispersion coating layer, by means of which the water vapour barrier can be further improved. Thus, the water vapour barrier of the packaging material 2 is advantageously lower than 2 g/m²/day, more advantageously lower than 1.5g/m²/day, and most advantageously lower than 1 g/m²/day. In addition or alternatively, the packaging material 2 may comprise an oxygen barrier layer in addition to said base paper 4 and coating 3. The purpose of the oxygen barrier layer is to increase the oxygen barrier of the product to a level lower than 50 cc/m²/day or lower than 40 cc/m²/day, more advantageously lower than 30 cc/m²/day or lower than 20 cc/m²/day, and most advantageously lower than 10 cc/m²/day or lower than 5 cc/m²/day. In addition or alternatively, the packaging material 2 may comprise an heat-sealable layer in addition to said base paper 4 and coating 3. Advantageously, the thickness of such a heat-sealable layer is 1 to 3 g/m², more advantageously lower than 2 g/m², and most advantageously lower than 1.5 g/m². These above-mentioned alternatives are shown in Fig. 4.

In an example, the inner packaging material comprises a film layer that contains one or more biofilms, such as for example
- polylactic acid, *i.e*. polylactide PLA, PLLA, PDLA, PDLLA,
- polycaprolactone PCL,
- a mixture of starch and polycaprolactone,
- polyester amide PEA,
- polyhydroxyalkanoate PHA,
- polyhydroxybutyrate PHB,
- polyhydroxybutyrate/valerate,
- polyhydroxybutyrate-co-polyhydroxyhexanoate PHBH,
- aliphatic polylactic acid copolymer CPLA,
- polybutyrate styrene PBS,
- aliphatic aromatic co-polyester AAC,
- starch based starch biopolymer blends, for example PSM and TPS, which advantageously comprise at least 10 wt% and not more than 90 wt-% of starch,
- polybutene succinate terephthalate,
- polybutylene adipate terephthalate,
- polybutylene succinate,
- polyvinyl alcohol and a mixture of polyvinyl alcohol and talc,
- a mixture of polylactide and biopolyester,
- a mixture of polylactide and biopolyester,
- biopolyester,
- a mixture of polyhydroxyalkanoate and biopolyester, and/or
- a mixture of biopolyester and modified starch.
Advantageously, the total content of the film layer(s) and biopolymers in the inner packaging material is thus, however, lower than 2 gsm, more advantageously lower than 1.5 gsm, and most advantageously lower than 1 gsm or lower than 0.5 gsm.

In an example, the inner package 1 a according to the invention, comprising at least 50%, for example 50 to 100%, of the inner packaging material 2, is placed inside the outer package 1 b. The inner package can be placed, for example, as a bag inside the outer package. Alternatively, the inner package can be laminated onto the outer package, for example onto the inner surface of recycled cardboard, before the manufacture of the actual package, such as a food package box. The inner surface refers to that surface of the package which is closest to the product to be packed, or in contact with the product packed.

In an example, the inner package 1 a according to the invention, containing inner packaging material 2, can be laminated onto the outer package 1 b. The inner package to be laminated preferably contains at least 50% of inner packaging material which may consist of base paper 4 and a coating. The coating may contain one or more platy coating pigments and binding agent. The binding agent may comprise acrylate latex, styrene butadiene latex, styrene acrylate latex, and/or polyvinyl alcohol. For example, 20 to 70 wt-% of the total dry weight of the platy coating pigment and binding agent may consist of polyvinyl alcohol. The total dry weight of the platy coating pigment and binding agent may constitute at least 70 wt-% of said coating. In addition, the inner packaging material 2 may contain biopolymers, for example 0 to 2 g/m². The inner package 1 a can be laminated, for example, onto the surface of the inner side of the outer package, *i.e.* the surface that may come into contact with the product packed in the package. The lamination can be performed, for example, by laminating the inner package in a lamination nip by means of an adhesive layer onto the surface of the inner side of the outer package. Such a lamination technique can be called adhesive lamination, i.e. a process in which the inner and outer packages are combined by gluing to form a laminate. By means of the adhesive, desired adhesion can be provided between the different material layers of the laminate.

The inner and/or outer package can be supplied in the form of roll goods for lamination. Thus, for example an actual paperboard or cardboard box can be manufactured after the lamination. It is also possible to laminate unbent, such as die cut paperboard or cardboard blanks which can be bent to the actual shape of the package after the lamination.

Adhesive lamination can be implemented as wet lamination or dry lamination. In wet lamination, a solvent and/or an aqueous adhesive agent is used. Advantageously, said adhesive layer comprises aqueous adhesive. In dry lamination, the adhesive is dried already before the lamination nip formed by rolls, and the adhesive is dry when introduced into the lamination nip. In the adhesive lamination process, the adhesive is typically evaporated, or it is chemically cured. Adhesives are known to a person skilled in the art.

### Example

The barrier effect of inner packaging material according to the invention on the migration of mineral oil was tested. The inner packaging material 2 tested consisted of base paper 4 and a coating 3. The coating 3 contained kaolin and polyvinyl alcohol. The product had a basis weight of 55 g/m².

The barrier effect of the inner packaging material is determined by means of migration of mineral oil from cardboard through the sample. The migration into the food stimulant Tenax® was determined on the basis of DIN EN 14338 by means of a migration cell. The migration time was 5 days, and the migration temperature was 60°.

Mineral oil migrated into the Tenax® stimulant was determined by the determining method, in which samples were extracted for 2 h at about 20°C in a mixture of hexane and ethanol (1:1), the ethanol was shaken with water, the hexane phase was separated by AgNO₃ impregnated silica gel into aliphatic (MOSH) and aromatic (MOAH) fractions, and both fractions were concentrated by evaporation in a vacuum. The mineral oil content was determined by gas chromatography (GC-FID).

A test piece was cut out of the sample material used in the test. The test piece was coated with cardboard with a known mineral oil content, entered in a migration cell and covered with 2 g of Tenax® stimulant. Next, the cell was closed tightly and the migration test was carried out. After an agreed migration time (5 days), the Tenax® contained in the cell was removed into a sample flask and extracted with 10 ml of hexane. After extraction for two hours, the Tenax® was isolated. The hexane phase was analysed.

The mineral oil substances dissolved in the hexane phase were pre-isolated with AgNO₃ impregnated silica gel into aliphatic and aromatic fractions, and both fractions were concentrated by vacuum evaporation. The contained mineral oil substances were determined by gas chromatography with flame ionization (GC-FID) and quantified. The determination was always performed twice.

### Results:

Contents of aliphatic (MOSH - Mineral Oil Saturated Hydrocarbons) and aromatic (MOAH - Mineral Oil Aromatic Hydrocarbons) mineral oil hydrocarbons are shown in Table 1.

The mineral oil content (total) is the sum of the following MO fractions:
- MOSH -Mineral Oil Saturated Hydrocarbons
- MOAH - Mineral Oil Aromatic Hydrocarbons
- ≤C24 - subfraction whose carbon number is from about 14 to ≤24
- C24 - C35 - subfraction whose carbon number is from 24 to <35

**Table 1, Migration of MOSH and MOAH compounds**

| Average (mg/kg) | | | | Sum |
|---|---|---|---|---|
| MOSH | | MOAH | | (mg/kg) |
| <=C24 | >C24-C35 | <=C24 | >C24-C35 | MOSH/MOAH |
| 70 | 12 | 10 | 0 | 92 |

The mineral oil content of the cardboard sample was 8,300 µg/dm³. The total migration was 92 µg/dm³. Thus, about 99% of the migration of mineral oils could be prevented; on the basis of this, the inner packaging material has a good mineral oil migration barrier.

The invention is not limited solely to the examples presented in Figs. 1 to 4 and the above description but it may be modified within the scope of the appended claims.

## Claims

1. A food package comprising an outer package (1b) that contains mineral oil, and an inner package (1a) which is placed inside the outer package (1 b),
said inner package (1 a) containing at least 50% of inner packaging material (2) that contains from 0 to less than 2 g/m² of biopolymers, and
- base paper (4) with a coating (3) that comprises
- one or more platy coating pigments, and
- binding agent that comprises acrylate latex, styrene butadiene latex, styrene acrylate latex, and/or polyvinyl alcohol,
wherein
- 20 to 70 wt-% of the total dry weight of said platy coating pigment and binding agent consists of binding agent, and
- the total dry weight of said platy coating pigment and binding agent constitutes at least 70 wt-% of said coating (3).

2. The food package according to claim 1, wherein said inner package (1 a) is a bag.

3. The food package according to claim 1, wherein said inner package (1 a) is laminated inside the outer package.

4. The food package according to any of the preceding claims, in which said outer package (1 b) is a paperboard box or a cardboard box.

5. The food package according to any of the preceding claims, in which the outer package (1 b) comprises recovered fibres.

6. The food package according to any of the preceding claims, in which the outer package (1b) comprises printing ink that contains mineral oil.

7. The food package according to any of the preceding claims, in which the outer package (1 b) comprises compounds which belong to the group MOSH (mineral oil saturated hydrocarbons) and/or MOAH (mineral oil aromatic hydrocarbons), such as one or more MOSH compounds having a chain length of C10 to C23.

8. The food package according to any of the preceding claims, in which the binding agent in the inner packaging material (2) comprises polyvinyl alcohol, such as at least 50% of polyvinyl alcohol.

9. The food package according to any of the preceding claims, wherein the water vapour transmission rate of the inner packaging material (2) at air humidity of 50% and a temperature of 23°C is 0.5 to 12 g/m²/day, such as 0.8 to 3 g/m²/day.

10. The food package according to any of the preceding claims, in which the Cobb water resistance of the inner packaging material (2) is 17 to 35.

11. The food package according to any of the preceding claims, in which the KIT value of the inner packaging material (2) is 4 to 12.

12. The food package according to any of the preceding claims, wherein the content of coating (3) in the inner packaging material (2), in dry weight of the inner packaging material (2), is 3 to 14 g/m².

13. The food package according to any of the preceding claims, wherein said platy coating pigment of the inner packaging material (2) comprises talc, kaolin and/or mica, such as at least 50 wt-% of kaolin.

14. Use of inner packaging material as an mineral oil migration barrier in an inner package (1 a) for food, the inner package (1 a) being intended to be placed inside an outer package of a food package, the outer package containing mineral oil, the inner package (1 a) containing at least 50% of inner packaging material (2) containing less than 2g/m² of biopolymers, and
base paper (4) with a coating (3) that comprises
- one or more platy coating pigments, and
- binding agent that comprises acrylate latex, styrene butadiene latex, styrene acrylate latex, and/or polyvinyl alcohol,
wherein 20 to 70% of the total dry weight of said platy coating pigment and binding agent consists of binding agent, and the total dry weight content of said platy coating pigment and binding agent in said coating (3) is at least 70 wt-%.

## Patentansprüche

1. Eine Lebensmittelverpackung mit einer äußeren Verpackung (1b), die Mineralöl enthält, und eine innere Verpackung (1a), die im Inneren der äußeren Verpackung (1b) angeordnet ist,
wobei die innere Verpackung (1a) mindestens 50 % eines inneren Verpackungsmaterials (2) enthält, welches zwischen 0 bis weniger als 2 g/m² Biopolymere enthält, und
- Basispapier (4) mit einer Beschichtung (3), die Folgendes umfasst:
- ein oder mehrere flache Beschichtungspigmente und
- Bindemittel, das Acrylat-Latex, Styrol-Butadien-Latex, Styrol-Acrylat-Latex und/oder Polyvinylalkohol enthält,
wobei
- 20 bis 70 Gew.-% des Gesamttrockengewichts des flachen Beschichtungspigments und Bindemittels aus Bindemittel bestehen, und
- das Gesamttrockengewicht des flachen Beschichtungspigments und des Bindemittels mindestens 70 Gew.-% der Beschichtung (3) aus machen.

2. Lebensmittelverpackung gemäß Anspruch 1, wobei die innere Verpackung (1a) ein Beutel ist.

3. Lebensmittelverpackung gemäß Anspruch 1, wobei die innere Verpackung (1a) im Inneren der äußeren Verpackung laminiert ist.

4. Lebensmittelverpackung gemäß einem der vorhergehenden Ansprüche,
wobei die äußere Verpackung (1b) eine Pappschachtel oder eine Kartonschachtel ist.

5. Lebensmittelverpackung gemäß einem der vorhergehenden Ansprüche,
wobei die äußere Verpackung (1b) Sekundärfasern aufweist.

6. Lebensmittelverpackung gemäß einem der vorhergehenden Ansprüche,
wobei die äußere Verpackung (1b) Druckerfarbe umfasst, die Mineralöl enthält.

7. Lebensmittelverpackung gemäß einem der vorhergehenden Ansprüche,
wobei die äußere Verpackung (1b) Verbindungen aufweist, die zu der Gruppe MOSH (gesättigte Mineralöl-Kohlenwasserstoffe) und/oder MOAH (aromatische Mineralöl-Kohlenwasserstoffe) gehören, wie z. B. eine oder mehrere MOSH-Verbindungen mit einer Kettenlänge von C10 bis C23.

8. Lebensmittelverpackung gemäß einem der vorhergehenden Ansprüche,
wobei das Bindemittel in dem inneren Verpackungsmaterial (2) Polyvinylalkohol, wie z. B. mindestens 50 % Polyvinylalkohol aufweist.

9. Lebensmittelverpackung gemäß einem der vorhergehenden Ansprüche,
wobei die Wasserdampfdurchlässigkeitsrate des inneren Verpackungsmaterials (2) bei einer Luftfeuchtigkeit von 50 % und einer Temperatur von 23 °C bei 0,5 bis 12g/m²/Tag, wie z. B. 0,8 bis 3g/m²/Tag liegt.

10. Lebensmittelverpackung gemäß einem der vorhergehenden Ansprüche,
wobei die Cobb-Wasserbeständigkeit des inneren Verpackungsmaterials (2) zwischen 17 und 35 liegt.

11. Lebensmittelverpackung gemäß einem der vorhergehenden Ansprüche,
wobei der KIT-Wert des inneren Verpackungsmaterials (2) bei 4 bis 12 liegt.

12. Lebensmittelverpackung gemäß einem der vorhergehenden Ansprüche,
wobei der Gehalt der Beschichtung (3) in dem inneren Verpackungsmaterial (2), in Trockengewicht des inneren Verpackungsmaterials (2), bei 3 bis 14g/m² liegt.

13. Lebensmittelverpackung gemäß einem der vorhergehenden Ansprüche,
wobei das flache Beschichtungspigment des inneren Verpackungsmaterials (2) Talk, Kaolin und/oder Glimmer, wie z. B. mindestens 50 Gew.-% Kaolin aufweist.

14. Verwendung eines inneren Verpackungsmaterials als Mineralöl-Migrationsbarriere in einer inneren Verpackung (1 a) für Lebensmittel, wobei die innere Verpackung (1 a) im Inneren einer äußeren Verpackung einer Lebensmittelverpackung platziert werden soll, wobei die äußere Verpackung Mineralöl enthält, wobei die innere Verpackung (1 a) mindestens 50 % eines inneren Verpackungsmaterials (2) enthält, das weniger als 2g/m² Biopolymere enthält, und
Basispapier (4) mit einer Beschichtung (3), die Folgendes umfasst:
- ein oder mehrere flache Beschichtungspigmente und
- Bindemittel, das Acrylat-Latex, Styrol-Butadien-Latex, Styrol-Acrylat-Latex und/oder Polyvinylalkohol enthält,
wobei 20 bis 70 % des Gesamttrockengewichts des flachen Beschichtungspigments und des Bindemittels aus Bindemittel besteht, und der Gesamttrockengewichtgehalt des flachen Beschichtungspigments und des Bindemittels mindestens 70 Gew.-% der Beschichtung (3) ausmachen.

## Revendications

1. Emballage alimentaire comprenant un emballage extérieur (1b) qui contient une huile minérale, et un emballage interne (1a) qui est placé à l'intérieur de l'emballage externe (1b), ledit emballage interne (1a) contenant au moins 50 % de matériau d'emballage interne (2) qui contient de 0 à moins de 2 g/m² de biopolymères, et
- du papier de base (4) avec un revêtement (3) qui comprend
- un ou plusieurs pigments de revêtement lamellaire, et
- un liant qui comprend du latex d'acrylate, du latex de styrène et de butadiène, du latex de styrène et d'acrylate, et/ou de l'alcool polyvinylique,
dans lequel
- 20 à 70 % en poids du poids sec total dudit pigment de revêtement lamellaire et du liant sont constitués par un liant, et
- le poids sec total dudit pigment de revêtement lamellaire et du liant constitue au moins 70 % en poids dudit revêtement (3).

2. Emballage alimentaire selon la revendication 1, dans lequel ledit emballage interne (1 a) est un sac.

3. Emballage alimentaire selon la revendication 1, dans lequel ledit emballage interne (1 a) est lamellé à l'intérieur de l'emballage externe.

4. Emballage alimentaire selon l'une quelconque des revendications précédentes, dans lequel ledit emballage externe (1b) est une boîte en carton-pâte ou une boîte en carton.

5. Emballage alimentaire selon l'une quelconque des revendications précédentes, dans lequel l'emballage externe (1 b) comprend des fibres récupérées.

6. Emballage alimentaire selon l'une quelconque des revendications précédentes, dans lequel l'emballage externe (1b) comprend de l'encre d'impression qui contient une huile minérale.

7. Emballage alimentaire selon l'une quelconque des revendications précédentes, dans lequel l'emballage externe (1b) comprend des composés qui appartiennent au groupe MOSH (hydrocarbures saturés d'huile minérale) et/ou MOAH (hydrocarbures aromatiques d'huile minérale), tels qu'un ou plusieurs composés MOSH ayant une longueur de chaîne de C10 à C23.

8. Emballage alimentaire selon l'une quelconque des revendications précédentes, dans lequel le liant dans le matériau d'emballage interne (2) comprend de l'alcool polyvinylique, tel qu'au moins 50 % d'alcool polyvinylique.

9. Emballage alimentaire selon l'une quelconque des revendications précédentes, dans lequel le taux de transmission de vapeur d'eau du matériau d'emballage interne (2) à une humidité de l'air de 50 % et une température de 23°C est de 0,5 à 12 g/m²/jour, tel que 0,8 à 3 g/m²/jour.

10. Emballage alimentaire selon l'une quelconque des revendications précédentes, dans lequel la résistance à l'eau de Cobb du matériau d'emballage interne (2) est de 17 à 35.

11. Emballage alimentaire selon l'une quelconque des revendications précédentes, dans lequel la valeur KIT du matériau d'emballage interne (2) est de 4 à 12.

12. Emballage alimentaire selon l'une quelconque des revendications précédentes, dans lequel la teneur du revêtement (3) dans le matériau d'emballage (2), en poids sec du matériau d'emballage interne (2), est de 3 à 14 g/m².

13. Emballage alimentaire selon l'une quelconque des revendications précédentes, dans lequel ledit pigment de revêtement lamellaire du matériau d'emballage interne (2) comprend le talc, le kaolin et/ou le mica, tel qu'au moins 50 % en poids de kaolin.

14. Utilisation d'un matériau d'emballage interne en tant que barrière contre la migration d'huile minérale dans un emballage interne (1 a) pour des denrées alimentaires, l'emballage interne (1 a) étant destiné à être placé à l'intérieur d'un emballage externe d'un emballage alimentaire, l'emballage externe contenant une huile minérale, l'emballage interne (1 a) contenant au moins 50 % de matériau d'emballage interne (2) contenant moins de 2 g/m² de biopolymères, et du papier de base (4) avec un revêtement (3) qui comprend
- un ou plusieurs pigments de revêtement lamellaire, et
- un liant qui comprend du latex d'acrylate, du latex de styrène et de butadiène, du latex de styrène et d'acrylate, et/ou de l'alcool polyvinylique,
dans lequel 20 à 70 % du poids sec total dudit pigment de revêtement lamellaire et du liant sont constitués par le liant, et la teneur en poids sec total dudit pigment de revêtement lamellaire et du liant dans ledit revêtement (3) est d'au moins 70 % en poids.
